Europäisches Patentamt

European Patent Office

Office européen des brevets

(19)

(11) **EP 0 705 024 A2**

(12) **EUROPEAN PATENT APPLICATION**

(43) Date of publication:
03.04.1996 Bulletin 1996/14

(51) Int. Cl.$^6$: **H04N 1/387**

(21) Application number: **95115092.9**

(22) Date of filing: **25.09.1995**

(84) Designated Contracting States:
**DE FR GB**

(30) Priority: **29.09.1994 JP 259310/94**

(71) Applicant: **Dainippon Screen Mfg. Co., Ltd.**
**Kamikyo-ku Kyoto 602 (JP)**

(72) Inventor: **Shibazaki, Hiroshi,**
**Dainippon Screen Mfg. Co. Ltd.**
**Horikawa-dori, Kamikyo-ku, Kyoto (JP)**

(74) Representative: **WILHELMS, KILIAN & PARTNER**
**Patentanwälte**
**Eduard-Schmid-Strasse 2**

(54)     **Method of generating color separation images and apparatus for the same**

(57)     A processing system of the present invention effectively expresses an overlap state of image parts, which can conventionally be expressed only by deformation of the image parts. The system of the invention is accordingly applicable to soft packaging gravure process. No deformation of the objects increases the processing speed and reduces the time and labor required for 'correction'. Object information 18a representing objects A through C with their densities and overlap information 18b representing an overlap state of the objects A through C are stored in a RAM 18. The overlap information 18b allocates an overlap order '1' and an 'Underprint' attribute to the object A, an overlap order '2' and a 'Knockout' attribute to the object B, and an overlap order '3' and the 'Knockout' attribute to the object C. In a page image prepared under such printing condition, an overlap of the object B with the object A is affected by the density of the object A, whereas an overlap of the object B and the object C with the object A is affected not by the density of the object B but by the density of the object A.

Fig. 20

EP 0 705 024 A2

## Description

## BACKGROUND OF THE INVENTION

### Field of the Invention

The present invention relates to a method of generating a plurality of color separation images of a color image including a plurality of image parts, and also to an apparatus for the same.

### Description of the Related Art

The result of printing a document generally depends upon specification of image parts including figures, characters, and pictures and overlap orders of the image parts. For example, when the overlap orders define a second image part to be laid upon a first image part, the second image part is preferential and written over the first image part for expression of the whole document.

Definition of a document by the image parts and their overlap orders helps process operators and designers easily grasp and edit the document. In actual printing procedures, however, the relationship between image parts defined only by the overlap orders may give undesirable printing results. This is often observed in 'Overprint' process, which prints a second image part over a first image part and is not easily attained only by the definition of image parts and their overlap orders.

A conventional technique recently developed to obtain a desired printing result allocates attributes of prepress process to the respective image parts. 'Knockout' and 'Overprint' are known attributes of prepress process. The printing results by knockout and overprint techniques are described below based on the drawings.

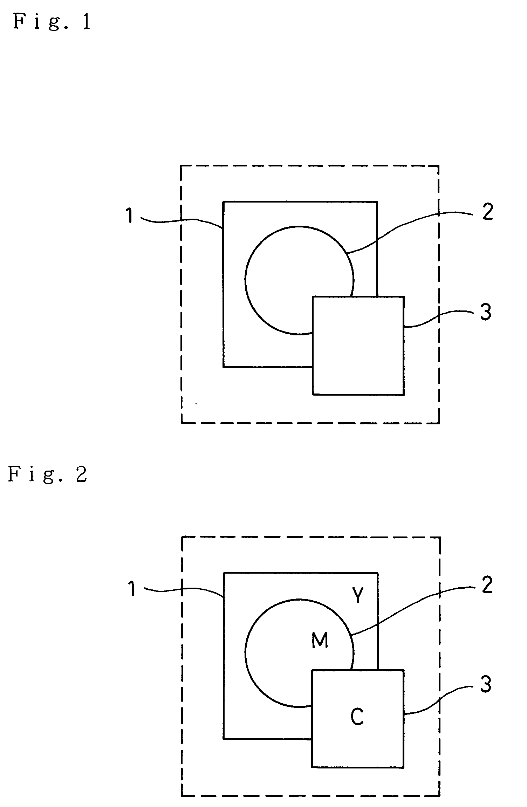

Fig. 1 shows original figures of first through third image parts 1 through 3. In this drawing, the numerals '1', '2', and '3' represent image parts themselves as well as their overlap orders. The first image part 1 is a rectangle painted with yellow (Y) printing ink; the second image part 2 is a circle painted with magenta (M) printing ink; and the third image part 3 is a rectangle printed with cyan (C) printing ink. Although these figures are expressed as monochromatic in this example for the clarity of explanation, these figures are often printed in plural colors in actual printing procedures.

When a second image part is to be laid upon a first image part, 'Knockout' process gives preference to the second image part and ignores the first image part. Namely, the 'Knockout' process gives preference to a knockout or upper image part over a lower image part having a lower overlap order for all of Y, M, C, and K color plates.

In case that the 'Knockout' attribute is allocated to all the first through the third image parts 1 through 3, this gives a printing result shown in Fig. 2. As for the C color plate, the third image part 3 is preferential over the first and the second image parts 1 and 2 having the lower overlap orders, and the densities of knocked-out portions of the first and the second image parts 1 and 2 are ignored. As for the M color plate, the second image part 2 is preferential over the first image part 1 having the lower overlap order, and the density of a knocked-out portion of the first image part 1 is ignored. The density of the first image part 1 is adopted for the Y color plate.

When a second image part is to be laid upon a first image part, 'Overprint' process prints the second image part over the first image part. Namely, the 'Overprint' process adopts the density of an overprint or upper image part preferential over a lower image part having a lower overlap order for a color plate having an effective density in the upper image part, while adopting the density of the lower image part for a color plate having no effective density (that is, zero density) in the upper image part. Image parts are defined by the densities corresponding to the respective color plates Y, M, C, and K. The color plate having an effective density in the image part specified as above implies a color plate having a non-zero density in the image part. In the like manner, the color plate having no effective density in the image part means a color plate having zero density in the image part. In the description hereinafter, the expressions like effective density and no effective density have the above implications.

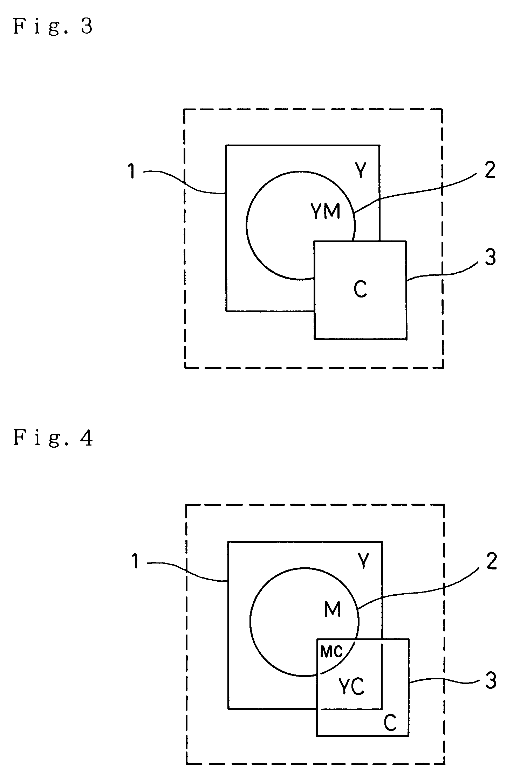

In case that the 'Overprint' attribute is allocated only to the second image part 2, this gives a printing result shown in Fig. 3. The density of the second image part 2 is adopted to be preferential over the first image part 1 having the lower overlap order for the M color plate having an effective density in the second image part 2. The second image part 2, however, has no effective density in the Y color plate, and the density of the first image part 1 having the lower overlap order is accordingly adopted for the Y color plate. The third image part 3 has the 'Knockout' attribute and is thus expressed only by the C color plate.

In case that the 'Overprint' attribute is allocated only to the third image part 3, this gives a printing result shown in Fig. 4. The density of the third image part 3 is adopted to be preferential over the first image part 1 and the second image part 2 having the lower overlap orders for the C color plate having an effective density in the third image part 3. The third image part 3, however, has no effective densities in the Y and M color plates, and the densities of the first image part 1 and the second image part 2 having the lower overlap orders are respectively adopted for the Y and M color plates. The relationship between the first image part 1 and the second image part 2 is defined by the 'Knockout' attribute allocated to the second image part 2.

Allocation of the 'Knockout' and 'Overprint' attributes to the respective image parts allows an overlap of the image parts to be expressed in general prepress process.

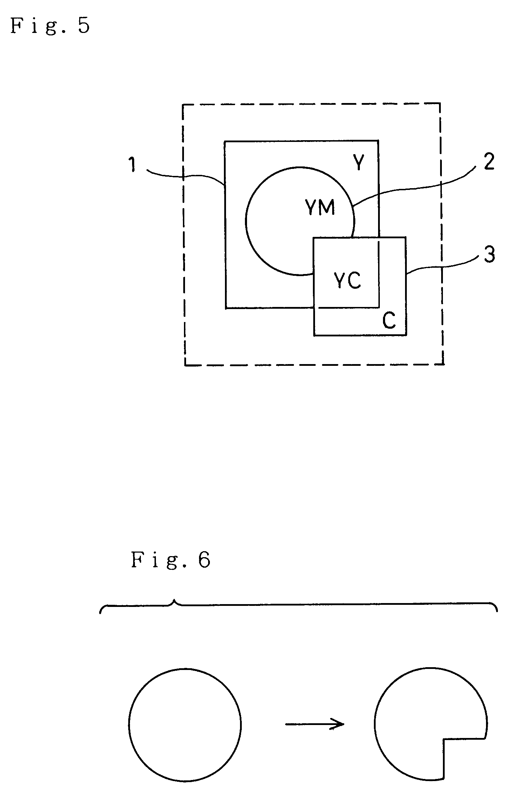

This conventional method, however, does not always succeed in expressing an overlap state of image parts appropriately. For example, it fails to express a printing state shown in Fig. 5, where the second image part 2 is affected by the density of the first image part 1, while the third image part 3 is affected not by the density of the second image part 2 but by the density of the first image part 1. Such a printing result can not be obtained by 'Knockout' and 'Overprint' techniques, since 'Knockout' excludes any effect of the lower image parts while 'Overprint' accepts any effect of the lower image parts. The conventional method can not selectively change the effect of lower image parts, thereby not giving such a printing result.

The example of Fig. 5 is often observed when a print is on soft packaging material like vinyl or cellophane. Soft packaging members composed of material like vinyl or cellophane with high transparency are widely used for wrapping and packaging food. Printing on such soft packaging material requires a pre-process of filling a printing area with white ink prior to printing inks of primary colors over the white background, in order to reproduce the same colors as print on standard white paper. In the structure requiring a background of white ink (white separation), image parts printed over the white separation are required to be constantly affected by white ink (this corresponds to an 'Underprint' attribute in the description of an embodiment below). On the assumption that the first image part 1 represents the white separation, it should be easily understood that the printing result of Fig. 5 is often required.

The conventional method described above can not express the overlap state of image parts shown in Fig. 5 and is thus not applicable to soft packaging gravure process, where figures and characters are to be printed on soft packaging material.

The printing state shown in Fig. 5 is obtained with only the 'Knockout' and 'Overprint' attributes by cutting a part of the circle of the second image part 2 as shown in Fig. 6. This, however, requires time- and labor-consuming computer operations for checking overlap states of the respective image parts and deforming the shapes according to the requirements, thereby lowering the processing speed. The image part once processed to have a deformed shape can not be changed or modified easily like original image parts. This requires complicated operations even for simple correction of a figure.

## SUMMARY OF THE INVENTION

One object of the present invention is thus to effectively express an overlap state of image parts, which can conventionally be expressed only by deformation of the image parts, and thereby allow application to soft packaging gravure process.

Another object of the invention is to increase the processing speed and reduce the time and labor required for 'correction'.

The above and the other related objects are realized by a method of generating a plurality of color separation images of a color image including a plurality of image parts. The method comprises:

(a) preparing image parts information representing the plurality of image parts, the image parts information representing density of each of the plurality of image parts for each of a plurality of color separations, overlap order information representing a set of orders of the plurality of image parts in overlapping the plurality of image parts, and attribute information representing a set of attributes of the plurality of image parts in overlapping the plurality of image parts; and
(b) determining density of a color separation image for a subject color separation, including the steps of:

(i) judging from the overlap order information whether at least two overlapping image parts including a lower image part and an upper image part exist or not; and
(ii) when the overlap order information indicates existence of the upper image part and the lower image part and when the lower image part has a predetermined attribute, adopting a density of the lower image part for a color separation image, irrespective of an attribute allocated to the upper image part.

The method of generating color separation according to the invention adopts the density of the lower image part for a color separation image, irrespective of the attribute allocated to the upper image part. This means that the upper image part is constantly affected by the effective density of the lower image part.

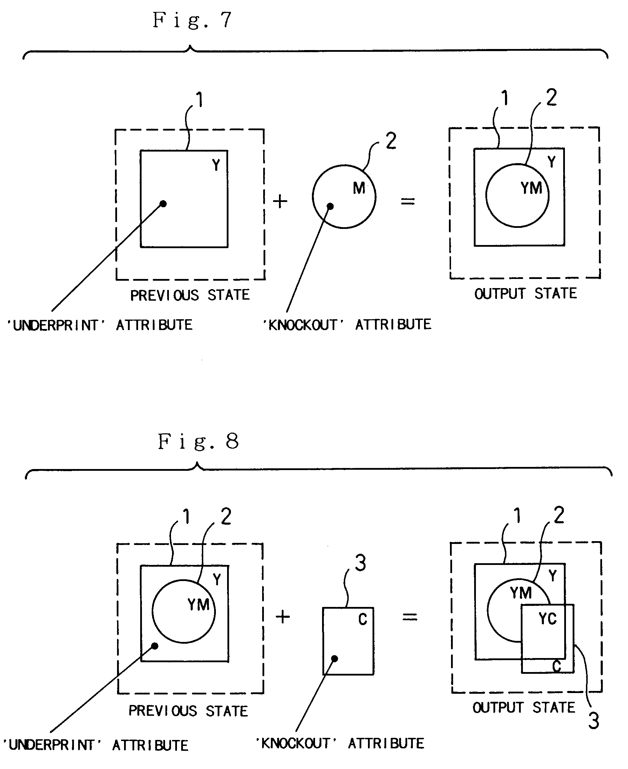

In an example of Fig. 7, a predetermined attribute (hereinafter referred to the 'Underprint' attribute), which is specified in step (b) of the above method, is allocated to a first image part 1, while the 'Knockout' attribute is given to a second image part 2. Under such conditions, as shown by the output state of Fig. 7, the second image part 2 corresponding to an overlap area is expressed by the effective densities of the first image part 1 and the second image part 2.

When a third image part 3 having the 'Knockout' attribute is further to be laid upon the first and the second image parts 1 and 2, the third image part 3 is affected not by the density of the second image part 2 but by the density of the first image part 1 as shown by the output state of Fig. 8. This output state corresponds to the printing result of Fig. 5 described previously. The method of the present invention accordingly expresses an overlap of image parts, which can conventionally be expressed only by deformation of the image parts.

The method of the invention is accordingly applicable to soft packaging gravure process. No deformation of the image parts increases the processing speed and reduces the time and labor required for 'correction'.

In accordance with one preferable application, the step (a) further comprises the step of:

(a-1) allocating a predetermined overlap attribute to the upper image part, the predetermined overlap attribute indicating to make a density of the upper image part preferential over a density of the lower image part for all of the plurality of color separation images.

This structure allocates a predetermined attribute to an upper image part for making the density of the upper image part preferential over the density of a lower image part for all of plurality of separation images. The predetermined attribute corresponds to 'Knockout'. When the 'Knockout' attribute is allocated to the upper image part while the 'Underprint' attribute is allocated to the lower image part, the density of the lower image part is adopted for a color plate having an effective density in the lower image part.

It is preferable that the step (b) further comprises the step of:

(iii) when the overlap order information indicates existence of the upper image part, the lower image part and a third image part to be laid under the lower image part and when the lower image part has a predetermined attribute, adopting a density of the third image part, for the color separation image.

This structure adopts the density of a third image part, which is laid under the lower image part, for a color plate having an effective density in the third image part. This realizes both the functions of 'Underprint' and 'Overprint'.

Preferably the plurality of color separation images are respectively expressed on Y, M, C, and K color plates.

The method also has the step of:

(c) recording the color separation images onto a photosensitive film.

The present invention is directed to another method of generating a plurality of color separation images of a color image including a plurality of image parts, the method comprising the steps of:

(d) preparing image parts information representing the plurality of image parts, the image parts information representing density of each of the plurality of image parts for each of a plurality of color separations, overlap order information representing a set of orders of the plurality of image parts in overlapping the plurality of image parts, and attribute information representing a set of attributes of the plurality of image parts in overlapping the plurality of image parts; and

(e) determining density of a color separation image for a subject color separation, including the steps of:

(i) judging from the overlap order information whether at least two overlapping image parts including a lower image part and an upper image part exist or not; and

(ii) when the overlap order information indicates existence of the upper image part and the lower image part and when the lower image part has a predetermined attribute, adopting the higher of densities of the upper image part and the lower image part for a color separation image, irrespective of an attribute allocated to the upper image part.

This method of generating color separation adopts the higher of densities of an upper image part and a lower image part for a color separation image, irrespective of an attribute allocated to the upper image part. This is another example of Overprint, where the upper image part may be affected by the density of the lower image part.

According to one preferable application, the step (d) comprises the step of:

(d-1) allocating a predetermined overlap attribute to the upper image part, the predetermined overlap attribute indicating to make a density of the upper image part preferential over a density of the lower image part for all of the plurality of color separation images.

According to a typical structure, the step (e) further comprises the step of:

(iii) when the overlap order information indicates existence of the upper image part, the lower image part and a third image part to be laid under the lower image part and when the lower image part has a predetermined attribute, adopting a density of the third image part, for the color separation image.

Preferably the plurality of color separation images are respectively expressed on Y, M, C, and K color plates.

The method also has the step of:

(f) recording the color separation images onto a photosensitive film.

The invention is also directed to an apparatus for generating a plurality of color separation images of a color image including a plurality of image parts. The apparatus comprises:

a memory for storing image parts information representing the plurality of image parts, the image parts information representing density of each of the plurality of image parts for each of a plurality of color separations, overlap order information representing a set of orders of the plurality of image parts in overlapping the plurality of image parts, and attribute information representing a set of attributes of the plurality of image parts in overlapping the plurality of image parts; and

control means for determining density of a color separation image for a subject color separation, including:

judging means for judging from the overlap order information whether at least two overlapping image parts including a lower image part and an upper image part exist or not; and

adopting means for, when the overlap order information indicates existence of the upper image part and the lower image part and when the lower image part has a predetermined attribute, adopting a density of the lower image part for a color separation image, irrespective of an attribute allocated to the upper image part.

The invention is further directed to another apparatus for generating a plurality of color separation images of a color image including a plurality of image parts. The apparatus comprises:

a memory for storing image parts information representing the plurality of image parts, the image parts information representing density of each of the plurality of image parts for each of a plurality of color separations, overlap order information representing a set of orders of the plurality of image parts in overlapping the plurality of image parts, and attribute information representing a set of attributes of the plurality of image parts in overlapping the plurality of image parts; and

control means for determining density of a color separation image for a subject color separation, including:

judging means for judging from the overlap order information whether at least two overlapping image parts including a lower image part and an upper image part exist or not; and

adopting means for, when the overlap order information indicates existence of the upper age part and the lower image part and when the lower image part has a predetermined attribute, adopting the higher of densities of the upper image part and the lower image part for a color separation image, irrespective of an attribute allocated to the upper image part.

These and other objects, features, aspects, and advantages of the present invention will become more apparent from the following detailed description of the preferred embodiment with the accompanying drawings.

## BRIEF DESCRIPTION OF THE DRAWINGS

Fig. 1 shows original figures of image parts 1 through 3 processed by a conventional technique;

Fig. 2 shows an overlap state of the age parts 1 through 3, where all the image parts 1 through 3 have 'Knockout' attribute;

Fig. 3 shows an overlap state of the image parts 1 through 3, where only the image part 2 has 'Overprint' attribute;

Fig. 4 shows an overlap state of the image parts 1 through 3, where only the image part 3 has 'Overprint' attribute;

Fig. 5 shows an overlap state to be expressed by the present invention;

Fig. 6 shows a technique conventionally applied to attain the overlap state shown in Fig. 5;

Figs. 7 and 8 illustrate functions of the present invention;

Fig. 9 is a block diagram schematically illustrating a processing system 10, which realizes a method of generating a plurality of color separation images embodying the invention;

Fig. 10 shows a data structure of overlap information 18b;

Fig. 11 is a flowchart showing a routine of page image preparation executed by the CPU 12;

Figs. 12 through 14 are flowcharts showing details of the output operation executed at step S120 of the page image preparation routine shown in Fig. 11;

Fig. 15 shows contents of areas E0 through E2 after the pre-processing in output operation;

Fig. 16 shows contents of the areas E0 through E2 when an object A is processed in output operation;

Fig. 17 shows contents of the areas E0 through E2 when an object B is processed in output operation;

Fig. 18 shows contents of the areas E0 through E2 when an object C is processed in output operation;

Fig. 19 shows contents of the areas E0 through E2 after the post-processing in output operation; and

Fig. 20 shows a page image obtained by the output operation.

## DESCRIPTION OF THE PREFERRED EMBODIMENT

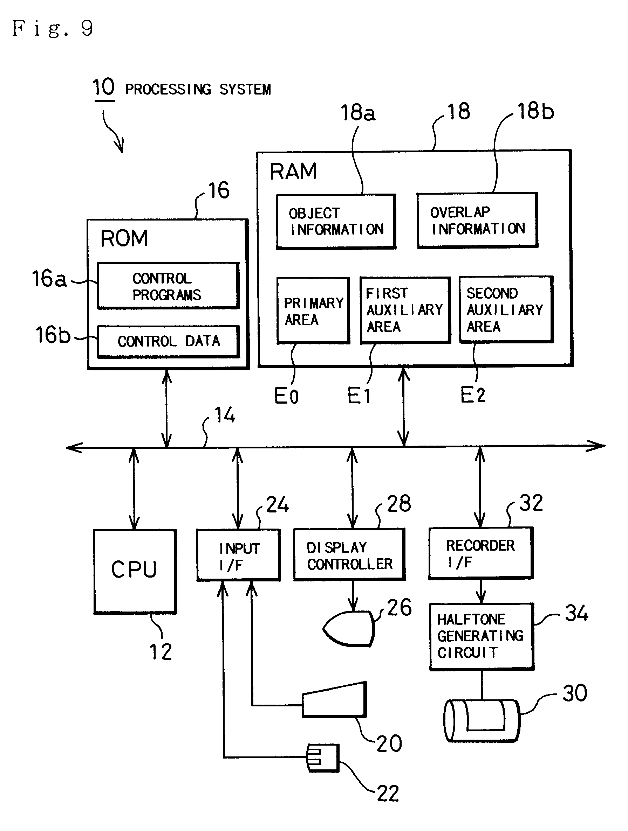

Fig. 9 is a block diagram schematically illustrating a processing system 10, which realizes a method of generating color separation images embodying the invention.

The processing system 10 includes a CPU 12, a ROM (read only memory) 16, and a RAM (random access memory) 18, which are interconnected via a bus line 14. The bus line 14 is also connected to a keyboard 20 and a mouse 22 via an input interface 24, a color CRT 26 via a display controller 28, and a recorder 30 via a recorder interface 32 and a halftone generating circuit 34.

Control programs 16a and control data 16b required for executing a variety of operations are previously stored in the ROM 16, whereas data including object information 18a and overlap information 18b required for executing the variety of operations are stored in the RAM 18.

The object information 18a is a set of image data representing figures, characters, pictures, and other image parts (hereinafter referred to as objects). Image data corresponding to picture objects are obtained by optically reading an original image with a picture scanner (not shown); those corresponding to character objects are by inputting character cord with a word processor (not shown); and those for figure objects are by reading the original figure with a linework scanner (not shown). Different types of image data have different structures. Image data of a figure object include outline data representing the outline of the figure, positional data representing the position of the figure, and color data representing densities of four color plates, that is, yellow (Y), magenta (M), cyan (C), and black (K) plates, in an area inside the outline.

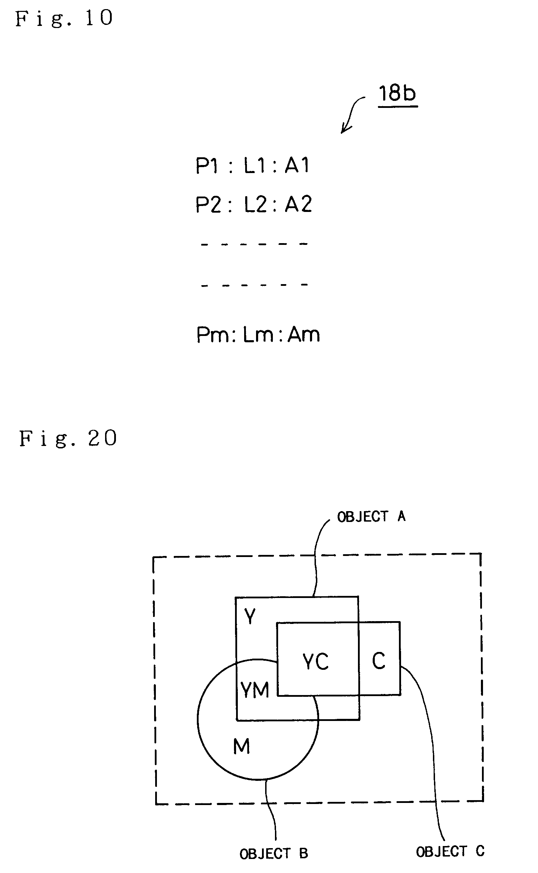

The overlap information 18b defines an overlap state of a plurality of objects and has a table structure shown in Fig. 10. The table is a set of records corresponding to 'm' objects, where each record is an array of three elements. The three elements of record are a pointer Pm for specifying each object, an overlap order data Lm representing an overlap order of each object, and an attribute data Am representing an attribute or characteristic of the overlap. The pointer Pm shows an address where image data of each object is stored. The overlap order data Lm are integers of not less than 1, where the greater numeral denotes the upper position in overlap. The attribute data Am are numerals of 0 through 3, where 0, 1, 2, and 3 respectively represent 'Knockout', 'Underprint', 'Overprint', and 'Overprint + Underprint'. The overlap information 18b is obtained by processing operator's key inputs as described below.

The RAM 18 also has three specific areas used for output operation of image data; that is, a primary area E0 and first and second auxiliary areas E1 and E2 for temporary use. Each area E0, E1, or E2 consists of areas of Y, M, C, and K plates and represents output condition of image data in bit map data structure. Each color pate of the respective areas E0, E1, and E2 has a depth of tone (for example, 8 bits). Actual application of these areas E0, E1, and E2 will be described later.

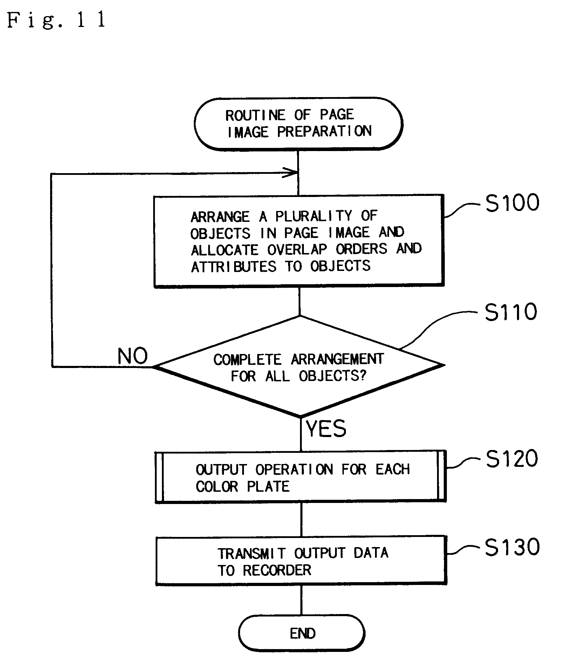

The CPU 12 executes the programs previously stored in the ROM 16 to prepare a page image based on a plurality of objects stored as the object information 18a in the RAM 18 and output the page image to the recorder 30. Fig. 11 is a flowchart showing a routine of page image preparation executed by the CPU 12.

When the program enters the routine, the CPU 12 arranges a plurality of objects in a page image expressed as page data Dp and simultaneously gives overlap orders and attributes to the respective objects at step S100. In concrete procedures, the CPU 12 reads page data Dp corresponding to one page from a magnetic disk (not shown) or the like and displays a page image corresponding to the page data Dp on the color CRT 26 via the display controller 28. The operator interacts with the page image displayed on the screen of color CRT 26 and arranges a plurality of objects, which are stored in the RAM 18, in the page image with the keyboard 20 and the mouse 22. Based on the arrangement, the CPU 12 allocates values to positional data of the respective objects in the object information 18a. In response to key inputs from the operator, the CPU 12 simultaneously gives overlap orders and attributes regarding the overlap to the respective objects to complete the overlap information 18b.

After conclusion of the process at step S100, the program proceeds to step S110 at which it is determined whether all the objects previously stored in the RAM 18 have been arranged in the page image. When the answer is negative at step S110, that is, when non-arranged objects remain, the program returns to step S100 to repeat the process for the remaining objects. When the process of step S100 is completed for all the objects, the program has affirmative answer at step S110 and goes to step S120.

At step S120, the CPU 12 executes output operation to obtain output data Dy, Dm, Dc, and Dk of the Y, M, C, and K color plates based on the object information 18a and the overlap information 18b generated at step S100. The process of output operation will be described later in detail. The program subsequently goes to step S130 at which the CPU 12 transmits the output data Dy, Dm, Dc, and Dk to the recorder interface 32. The program then goes to END to exit from the routine.

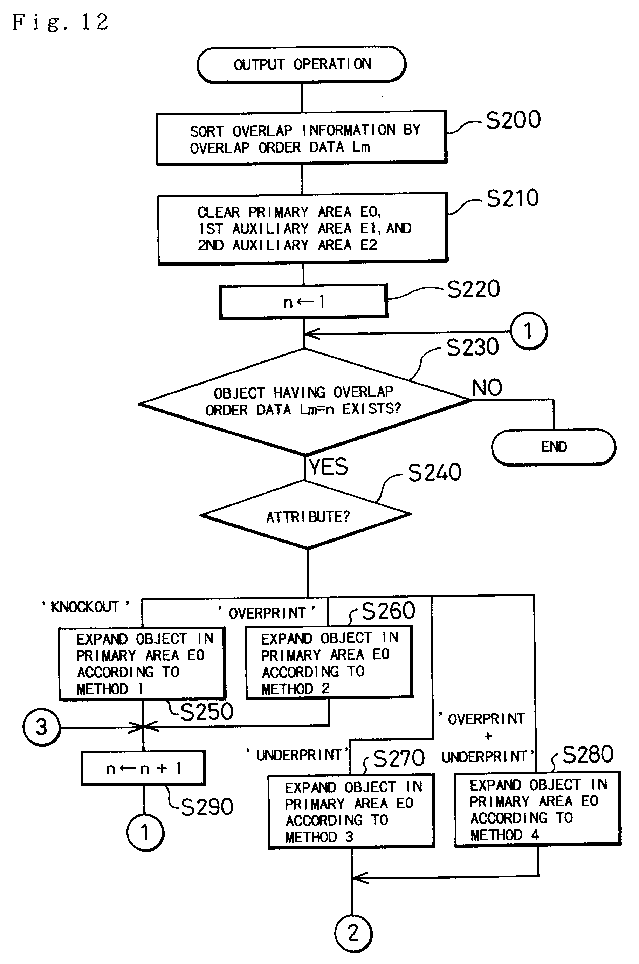

The output operation executed at step S120 expands each object to bit map data based on the object information 18a, stores the bit map data into the output-operation areas E0 through E2 on the RAM 18 by referring to the overlap information 18b, and composes the output data Dy, Dm, Dc, and Dk of the Y, M, C, and K color plates from the bit map data of the respective objects. Figs. 12 through 14 are flowcharts showing details of the output operation executed at step S120 of the page image preparation routine shown in Fig. 11.

When the program enters the routine of output operation, the CPU 12 first sorts the overlap information 18b by the overlap order data Lm at step S200. The CPU 12 then clears all the primary area E0, the first auxiliary area E1, and the second auxiliary area E2 assigned in the RAM 18 at step S210 and sets a variable 'n' to an initial value at step S220. The areas E1, E2, and E3 are cleared by initializing all pixels in these areas of the Y, M, C, and K color plates to zero.

At step S230, the CPU 12 reads the overlap information 18b stored in the RAM 18 to determine whether any object has overlap order data Lm equal to the value of the variable 'n'. In a concrete operation, the CPU 12 successively searches the table of overlap information 18b and, when finding the overlap order data Lm equal to the value of the variable 'n', determines that a target object exists.

When the answer is negative at step S230, the program goes to END and exits from this routine. When the answer is affirmative at step S230, the program goes to step S240 at which the CPU 12 determines the attribute of the target object: 'Knockout', 'Overprint', 'Underprint', or 'Overprint + Underprint'. According to a concrete operation, the CPU 12 compares the attribute data Am of the target record, which has been determined to have the overlap order data Lm equal to the value of the variable 'n' at step S230, with the values '0' through '3'.

When the attribute data Am of the target record is equal to zero, that is, 'Knockout', at step S240, the program goes to step S250 at which the CPU 12 expands the target object in the primary area E0 according to 'method 1', which is a method of determining the density by taking account of the attribute as described later. The CPU 12 first specifies a target object in the object information 18a, based on the pointer Pm of the target record, which has been determined to have the overlap order data Lm equal to the value of the variable 'n' at step S230. The CPU 12 reads information regarding the target object, generates bit map image data representing the target object, based on the information regarding the target object, and finally expands the image data of the target object in the primary area E0 according to the 'method 1'.

When the attribute data Am of the target record is equal to one, that is, 'Overprint', at step S240, the program goes to step S260 at which the CPU 12 generates bit map image data representing a target object in the same manner as above and expands image data of the target object in the primary area E0 according to 'method 2', which is a method of determining the density by taking account of the attribute as described later.

When the attribute data Am of the target record is equal to two, that is, 'Underprint', at step S240, the program goes to step S270 at which the CPU 12 generates bit map image data representing a target object in the same manner as above and expands image data of the target object in the primary area E0 according to 'method 3', which is a method of determining the density by taking account of the attribute as described later.

When the attribute data Am of the target record is equal to three, that is, 'Overprint + Underprint', at step S240, the program goes to step S280 at which the CPU 12 generates bit map image data representing a target object in the same manner as above and expands image data of the target object in the primary area E0 according to 'method 4', which is a method of determining the density by taking account of the attribute as described later.

There are four methods of determining the density by taking account of the attribute: 'method 1', 'method 2', 'method 3', and 'method 4', which respectively correspond to the four attributes, 'Knockout', 'Underprint', 'Overprint', and 'Overprint + Underprint'.

The 'method 1' overwrites the target object having 'Knockout' attribute, where the density of the overwritten target object is preferential over the density of the lower object (previous state) for all the four color plates, Y, M, C, and K. Such preference is expressed as Equation (1) given below:

$$\text{Previous state } (Iy1, Im1, Ic1, Ik1) + \text{Object } (Iy2, Im2, Ic2, Ik2) = \text{New state } (Iy2, Im2, Ic2, Ik2) \qquad (1)$$

where Iy1 through Ik2 are data representing the bit densities of the respective color plates Y, M, C, K of the objects.

The 'method 2' overwrites the target object having 'Overprint' attribute, where the density of the overwritten target object is preferential over the density of the lower object (previous state) for color plates having effective densities in the overwritten target object, while the density of the lower object is adopted for color plates having no effective densities. This rule is expressed as Equations (2) through (7) given below, where Iy2, Im2, Ic2, and Ik2 represent effective densities

other than 0[%]:

$$\text{Previous state (Iy1, Im1, Ic1, Ik1)} +$$

$$\text{Object (0, 0, 0, 0)}$$

$$= \text{New state (Iy1, Im1, Ic1, Ik1)} \qquad (2)$$

$$\text{Previous state (Iy1, Im1, Ic1, Ik1)} +$$

$$\text{Object (Iy2, 0, 0, 0)}$$

$$= \text{New state (Iy2, Im1, Ic1, Ik1)} \qquad (3)$$

$$\text{Previous state (Iy1, Im1, Ic1, Ik1)} +$$

$$\text{Object (0, Im2, 0, 0)}$$

$$= \text{New state (Iy1, Im2, Ic1, Ik1)} \qquad (4)$$

$$\text{Previous state (Iy1, Im1, Ic1, Ik1)} +$$

$$\text{Object (0, 0, Ic2, 0)}$$

$$= \text{New state (Iy1, Im1, Ic2, Ik1)} \qquad (5)$$

$$\text{Previous state (Iy1, Im1, Ic1, Ik1)} +$$

$$\text{Object (0, 0, 0, Ik2)}$$

$$= \text{New state (Iy1, Im1, Ic1, Ik2)} \qquad (6)$$

$$\ldots \qquad \ldots \qquad \ldots$$

$$\ldots \qquad \ldots \qquad \ldots$$

$$\text{Previous state (Iy1, Im1, Ic1, Ik1)} +$$

$$\text{Object (Iy2, Im2, Ic2, Ik2)}$$

$$= \text{New state (Iy2, Im2, Ic2, Ik2)} \qquad (7)$$

The 'method 3' overwrites the target object having 'Underprint' attribute, which corresponds to the 'method 1' for overwriting the target object having 'Knockout' attribute.

The 'method 4' overwrites the target object having 'Overprint + Underprint' attribute, which corresponds to the 'method 2' for overwriting the target object having 'Overprint' attribute.

Referring again to the flowchart of Fig. 12, after the processing at step S250 or S260, the program goes to step S290 at which the CPU 12 increments the variable 'n' by one, and returns to step S230. When a target object of the n-th overlap order has 'Knockout' or 'Overprint' attribute, the color density of the target object affects only the lower objects having lower overlap orders than 'n' while not affecting the upper objects. This allows subsequent objects to be processed successively.

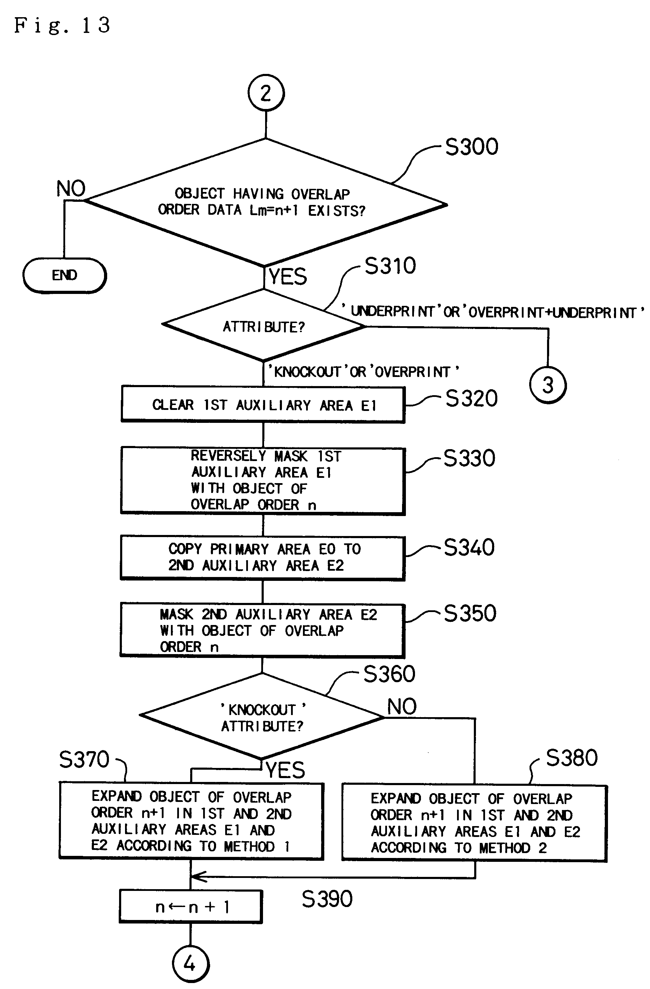

After the processing at step S270 or S280, on the other hand, the program proceeds to step S300 in the flowchart of Fig. 13, at which the CPU 12 reads the overlap information 18b stored in the RAM 18 to determine whether any object has overlap order data Lm equal to the value of the variable 'n+1'. In other words, the CPU 12 determines the presence or absence of an upper object having an upper overlap order by one than the object expanded in the primary area E0 and having the n-th overlap order. When the answer is negative at step S300, the program goes to END and exits from the routine.

When the CPU 12 determines the existence of an upper object or new target object at step S300, the program goes to step S310 at which the new target object is determined whether to have the 'Knockout' or 'Overprint' attribute or to have the 'Underprint' or 'Overprint + Underprint' attribute. According to a concrete operation, the CPU 12 determines whether the attribute data Am of the target record, which has been determined to have the overlap order data Lm equal to the value of the variable 'n+1' at step S300, is equal to the value '0' or '1' or the value '2' or '3'.

When the new target object is determined to have the 'Underprint' or 'Overprint + Underprint' attribute at step S310, the program returns to step S290 in the flowchart of Fig. 12 to repeat the subsequent process.

When the new target object is determined to have the 'Knockout' or 'Overprint' attribute at step S310, on the other hand, the program goes to step S320 at which the CPU 12 clears the first auxiliary area E1, and to step S330 at which the CPU 12 reversely masks the first auxiliary area E1 with the object having the n-th overlap order. The reverse masking process allocates the value '0' to the area of the object having the n-th overlap order in the first auxiliary area E1 while assigning the value 255 (=FFh) to the residual area, where 255 is the maximum value expressible by 8-bit data and not used as the density.

The CPU 12 copies the primary area E0 to the second auxiliary area E2 on the RAM 18 at step S340, and masks the second auxiliary area E2 with the object having the n-th overlap order at step S350. The masking process allocates the value 255 (=FFh) to the area of the object having the n-th overlap order in the second auxiliary area E2 while assigning the value 0 to the residual area.

After execution of step S350, the program proceeds to step S360 at which it is determined whether the new target object specified at step S300 has the 'Knockout' attribute. When the new target object is determined to have the 'Knockout' attribute at step S360, the program proceeds to step S370 at which the CPU 12 expands the new target object having the (n+1)-th overlap order in the first auxiliary area E1 and the second auxiliary area E2 according to the 'method 1' for determining the density by taking account of the attribute. When the new target object is determined not to have the 'Knockout' attribute, that is, to have the 'Overprint' attribute, on the other hand, the program proceeds to step S380 at which the CPU 12 expands the new target object having the (n+1)-th overlap order in the first auxiliary area E1 and the second auxiliary area E2 according to the 'method 2' for determining the density by taking account of the attribute. The expansion in the first auxiliary area E1 and the second auxiliary area E2 excludes the area having the value 255 (=FFh).

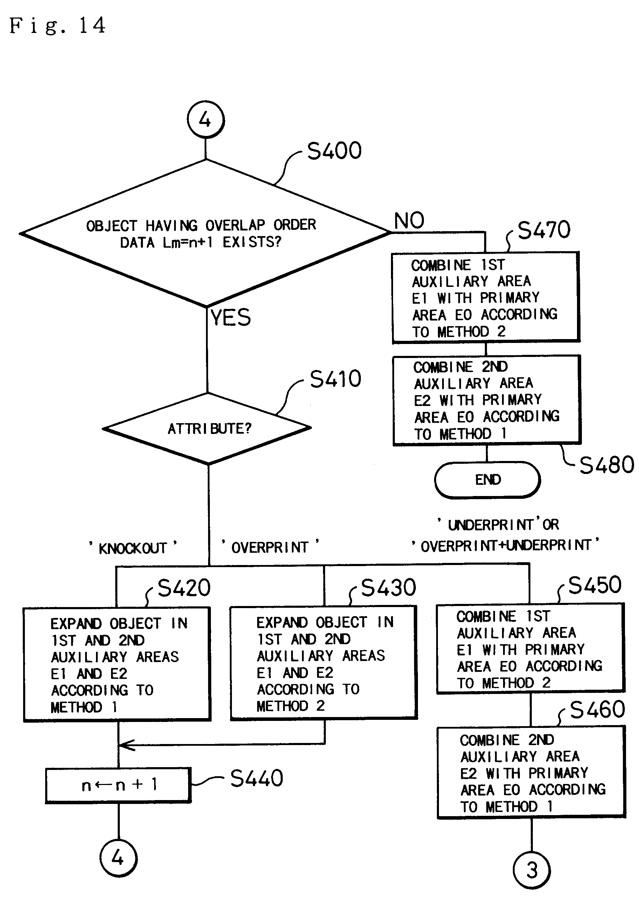

After execution of either step S370 or step S380, the program goes to step S390 at which the variable 'n' is incremented by one and then to step S400 in the flowchart of Fig. 14.

At step S400, the CPU 12 reads the overlap information 18b stored in the RAM 18 to determine whether any object has overlap order data Lm equal to the value of the variable 'n+1'. In other words, the CPU 12 determines the presence or absence of an upper object having an upper overlap order by two than the object expanded in the primary area E0 and having the n-th overlap order (since the variable 'n' has already been incremented by one at step S290).

When the existence of an upper object or new target object is recognized at step S400, the program goes to step S410 at which the CPU 12 determines whether the new target object has the 'Knockout' attribute, the 'Overprint' attribute, or the 'Underprint' or 'Overprint + Underprint' attribute. According to a concrete operation, the CPU 12 determines whether the attribute data Am of the target record, which has been determined to have the overlap order data Lm equal to the value of the variable 'n+1' at step S400, is equal to the value '0', the value '1', or the value '2' or '3'.

When the target object is determined to have the 'Knockout' attribute at step S410, the program proceeds to step S420 at which the CPU 12 expands the target object in the first auxiliary area E1 and the second auxiliary area E2 according to the 'method 1' described above.

When the target object is determined to have the 'Overprint' attribute at step S410, the program goes to step S430 at which the CPU 12 expands the target object in the first auxiliary area E1 and the second auxiliary area E2 according to the 'method 2' described above. After execution of either step S420 or step S430, the program goes to step S440 at which the variable 'n' is incremented by one, and then returns to step S400 to repeat the subsequent process.

When the target object is determined to have the 'Underprint' or 'Overprint + Underprint' attribute at step S410, the CPU 12 combines the first auxiliary area E1 with the primary area E0 according to the 'method 2' at step S450, and combines the second auxiliary area E2 with the primary area E0 according to the 'method 1' at step S460. The program then returns to step S290 in the flowchart of Fig. 12 to repeat the subsequent process.

When the answer is negative at step S400, the CPU 12 combines the first auxiliary area E1 with the primary area E0 according to the 'method 2' at step S470, and combines the second auxiliary area E2 with the primary area E0 according to the 'method 1' at step S480, in the same manner as the processing at steps S450 and S460. The program then goes to END and exits from the routine.

In the general flow of output operation, after the preliminary processing steps S200 and S210, the processing at steps S230 through S280 expands the n-th object having the n-th overlap order in the primary area E0 on the RAM 18. Repeated execution of steps S230 through S280 successively increments the overlap order by one and expands the overlapping objects in the primary area E0. When the n-th object having the n-th overlap order has the 'Underprint' or 'Overprint + Underprint' attribute, after expansion of the object in the primary area E0, upper objects having upper overlap orders than that of the n-th object are temporarily expanded in the first auxiliary area E1 and the second auxiliary area E2 for temporary use, until a next object having the 'Underprint' or 'Overprint + Underprint' attribute or the last object is found (steps S300 through S440). The first auxiliary area E1 is combined with the primary area E0 by the overprint process, whereas the second auxiliary area E2 is combined with the primary area E0 by the knockout process (steps S450 through S480).

The output operation thus constituted expands each object in the primary area E0, the first auxiliary area E1, or the second auxiliary area E2 on the RAM 18. This expansion process is described with a sample shown in Table 1.

Table 1

| Objects | Overlap orders | Attributes |
|---|---|---|
| Object A | 1 | 2 [Underprint] |
| Object B | 2 | 0 [Knockout] |
| Object C | 3 | 0 [Knockout] |

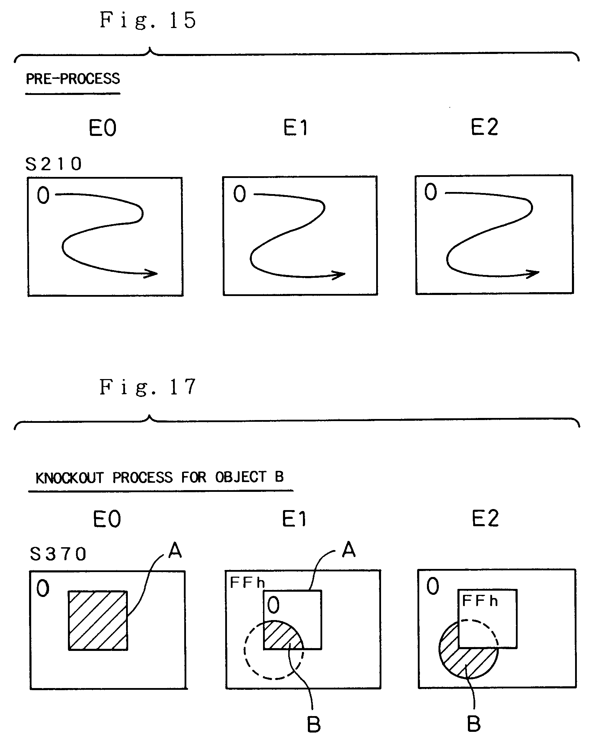

When the program enters the routine of output operation, the pre-processing step S210 in the flowchart of Fig. 12 clears all the bits in the primary area E0, the first auxiliary area E1, and the second auxiliary area E2 to zero as shown in Fig. 15.

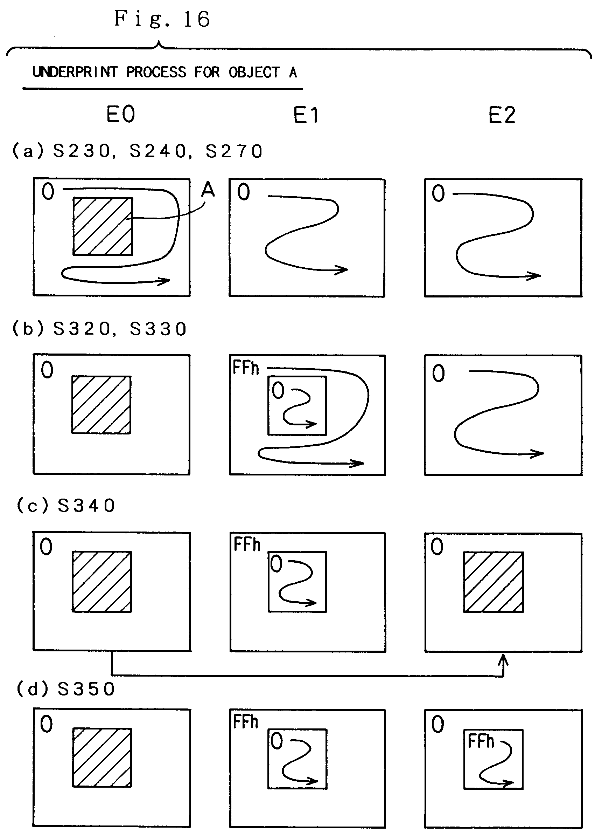

The processing at steps S230, S240, and S270 expands an object A having the overlap order '1' is expanded in the primary area E0 according to the 'method 3' as shown in Fig. 16(a). In the drawings of Fig. 16, hatched areas represent the density data of the object A. The value '0' remains in the residual bits of the primary area E0 other than the object A as well as in all the bits of the first auxiliary area E1 and the second auxiliary area E2.

As shown in Fig. 16(b), the processing at steps S320 and S330 allocates the value '0' to the area of the object A in the first auxiliary area E1 while assigning the value 255 (=FFh) to the residual area. The processing of step S340 copies the primary area E0 to the second auxiliary area E2 as shown in Fig. 16(c).

The processing of step S350 allocates the value FFh to the area of the object A in the second auxiliary area E2 while assigning the value '0' to the residual area as shown in Fig. 16(d).

The series of processes shown in Fig. 16 completes the expansion of the object A having the overlap order '1'.

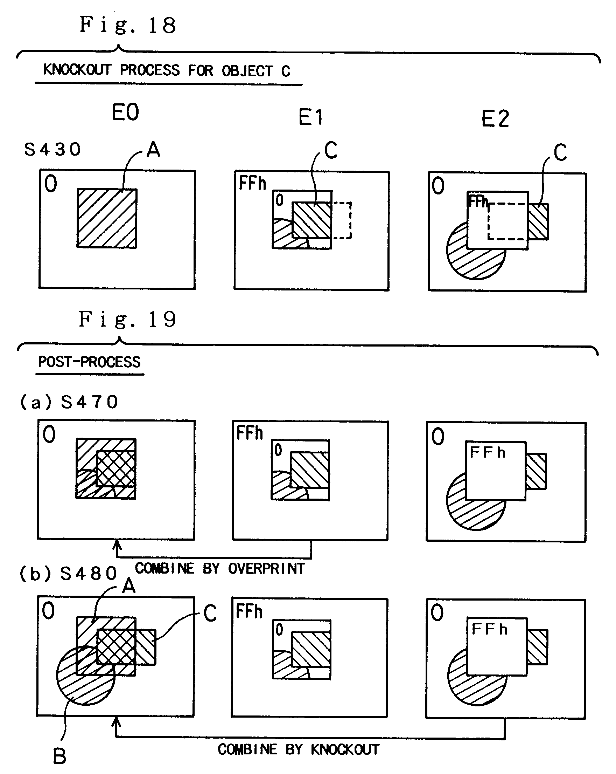

An object B having the overlap order '2' is processed next. Since the object B has the 'Knockout' attribute, the processing of step S370 allocates the density data of the object B to the area of the object B not having the value FFh but having the value '0' in the first auxiliary area E1 and the second auxiliary area E2 as shown in Fig. 17.

An object C having the overlap order '3' is processed subsequently. Since the object C also has the 'Knockout' attribute, the processing of step S420 allocates the density data of the object C to the area of the object C not having the value FFh but having the value '0' in the first auxiliary area E1 and the second auxiliary area E2 as shown in Fig. 18.

There are no objects having upper overlap orders than that of the object C. After the processing is completed for the object C, step S470 combines the first auxiliary area E1 with the primary area E0 according to the overprint process as shown in Fig. 19(a). Namely, the image of the first auxiliary area E1 is laid upon and combined with the primary area E0 where the density data of the object A is expanded.

Step S480 then combines the second auxiliary area E2 with the primary area E0 according to the knockout process as shown in Fig. 19(b). Namely, the image of the second auxiliary area E2 except the area of the value FFh is combined with the primary area E0 where the density data of the object A is expanded.

Data of the page image thus generated in the primary area E0 are transmitted as output data Dy, Dm, Dc, and Dk of the respective color plates, Y, M, C, and K, via the recorder interface 32 to the halftone generating circuit 34. The halftone generating circuit 34 converts the output data Dy, Dm, Dc, and Dk to halftone signals. The recorder 30 receives the halftone signals and records color separation images corresponding to the four color plates on a photosensitive film.

For the clarity of explanation, it is assumed that the objects A through C are expressed as monochromatic figure information respectively having uniform density data with respect to the Y, M, C printing inks. The image shown in Fig. 20 is accordingly recorded by the recorder 30. Under this printing condition, the overlap of the object B with the object A is affected by the density of the object A, whereas the overlap of the object B and the object C with the object A is affected not by the density of the object B but by the density of the object A. This corresponds to the state shown in Fig. 5.

The processing system 10 of the embodiment effectively expresses an overlap state of objects, which can conventionally be expressed only by deformation of the objects. The processing system 10 of the embodiment is accordingly applicable to soft packaging gravure process. No deformation of the objects increases the processing speed and reduces the time and labor required for 'correction'.

In this embodiment, the 'Overprint + Underprint' attribute having both the functions of overprint and underprint is set as one of available overlap attributes. This helps the operator easily make and edit a page image.

In the above embodiment, the 'method 2' of determining the density by taking account of the attribute adopts the density of an overwritten object preferential over the density of a lower object for color plates having effective densities in the overwritten object. Alternatively, the 'method 2' may adopt the higher of the densities of an overwritten object and a lower object for color plates having effective densities in the overwritten object. This is expressed as Equation (8) given below:

$$\text{Previous state (Iy1, Im1, Ic1, Ik1)} + \text{Object (Iy2, Im2, Ic2, Ik2)} =$$

$$\text{New state (Max[Iy1,Iy2], Max[Im1,Im2], Max[Ic1,Ic2], Max[Ik1,Ik2])} \qquad (8)$$

This modified structure allows an upper object having an upper overlap order to be affected by the density of a lower object by setting the 'Underprint' attribute to the lower object, thereby exerting the same effects as the above embodiment.

Although the invention is described according to the preferred embodiment, the above embodiment is only illustrative and not restrictive in any sense. There may be many modifications, alterations, and changes without departing from the scope or spirit of essential characteristics of the invention. The scope and spirit of the present invention are limited only by the terms of the appended claims.

## Claims

1. A method of generating a plurality of color separation images of a color image including a plurality of image parts, said method comprising the steps of:

   (a) preparing image parts information representing said plurality of image parts, said image parts information representing density of each of said plurality of image parts for each of a plurality of color separations, overlap order information representing a set of orders of said plurality of image parts in overlapping said plurality of image parts, and attribute information representing a set of attributes of said plurality of image parts in overlapping said plurality of image parts; and
   (b) determining density of a color separation image for a subject color separation, including the steps of:

      (i) judging from said overlap order information whether at least two overlapping image parts including a lower image part and an upper image part exist or not; and
      (ii) when said overlap order information indicates existence of said upper image part and said lower image part and when said lower image part has a predetermined attribute, adopting a density of said lower image part for a color separation image, irrespective of an attribute allocated to said upper image part.

2. A method in accordance with claim 1, wherein said step (a) comprises the step of:

   (a-1) allocating a predetermined overlap attribute to said upper image part, said predetermined overlap attribute indicating to make a density of said upper image part preferential over a density of said lower image part for all of said plurality of color separation images.

3. A method in accordance with claim 1, wherein said step (b) further comprises the step of:

   (iii) when said overlap order information indicates existence of said upper image part, said lower image part and a third image part to be laid under said lower image part and when said lower image part has a predetermined attribute, adopting a density of said third image part, for the color separation image.

4. A method in accordance with claim 1, wherein said plurality of color separation images are respectively expressed on Y, M, C, and K color plates.

5. A method in accordance with claim 1, said method further comprising the step of:

(c) recording said color separation images onto a photosensitive film.

6. A method of generating a plurality of color separation images of a color image including a plurality of image parts, said method comprising the steps of:

(d) preparing image parts information representing said plurality of image parts, said image parts information representing density of each of said plurality of image parts for each of a plurality of color separations, overlap order information representing a set of orders of said plurality of image parts in overlapping said plurality of image parts, and attribute information representing a set of attributes of said plurality of image parts in overlapping said plurality of image parts; and

(e) determining density of a color separation image for a subject color separation, including the steps of:

(i) judging from said overlap order information whether at least two overlapping image parts including a lower image part and an upper image part exist or not; and

(ii) when said overlap order information indicates existence of said upper image part and said lower image part and when said lower image part has a predetermined attribute, adopting the higher of densities of said upper image part and said lower image part for a color separation image, irrespective of an attribute allocated to said upper image part.

7. A method in accordance with claim 6, wherein said step (d) comprises the step of:

(d-1) allocating a predetermined overlap attribute to said upper image part, said predetermined overlap attribute indicating to make a density of said upper image part preferential over a density of said lower image part for all of said plurality of color separation images.

8. A method in accordance with claim 6, wherein said step (e) further comprises the step of:

(iii) when said overlap order information indicates existence of said upper image part, said lower image part and a third image part to be laid under said lower image part and when said lower image part has a predetermined attribute, adopting a density of said third image part, for the color separation image.

9. A method in accordance with claim 6, wherein said plurality of color separation images are respectively expressed on Y, M, C, and K color plates.

10. A method in accordance with claim 6, said method further comprising the step of:

(f) recording said color separation images onto a photosensitive film.

11. An apparatus for generating a plurality of color separation images of a color image including a plurality of image parts, said processing apparatus comprising:

a memory for storing image parts information representing said plurality of image parts, said image parts information representing density of each of said plurality of image parts for each of a plurality of color separations, overlap order information representing a set of orders of said plurality of image parts in overlapping said plurality of image parts, and attribute information representing a set of attributes of said plurality of image parts in overlapping said plurality of image parts; and

control means for determining density of a color separation image for a subject color separation, including:

judging means for judging from said overlap order information whether at least two overlapping image parts including a lower image part and an upper image part exist or not; and

adopting means for, when said overlap order information indicates existence of said upper image part and said lower image part and when said lower image part has a predetermined attribute, adopting a density of said lower image part for a color separation image, irrespective of an attribute allocated to said upper image part.

12. An apparatus in accordance with claim 11, wherein said memory comprises:

attribute information memory for storing a predetermined overlap attribute to said upper image part, said predetermined overlap attribute indicating to make a density of said upper image part preferential over a density of said lower image part for all of said plurality of color separation images.

13. An apparatus in accordance with claim 11, wherein said control means further comprises:

means for, when said overlap order information indicates existence of said upper image part, said lower image part and a third image part to be laid under said lower image part and when said lower image part has a predetermined attribute, adopting a density of said third image part, for the color separation image.

**14.** An apparatus in accordance with claim 11, wherein said plurality of color separation images are respectively expressed on Y, M, C, and K color plates.

**15.** An apparatus in accordance with claim 11, further comprising:
recording means for recording said color separation images onto a photosensitive film.

**16.** An apparatus for generating a plurality of color separation images of a color image including a plurality of image parts, said processing apparatus comprising:
a memory for storing image parts information representing said plurality of image parts, said image parts information representing density of each of said plurality of image parts for each of a plurality of color separations, overlap order information representing a set of orders of said plurality of image parts in overlapping said plurality of image parts, and attribute information representing a set of attributes of said plurality of image parts in overlapping said plurality of image parts; and
control means for determining density of a color separation image for a subject color separation, including:
judging means for judging from said overlap order information whether at least two overlapping image parts including a lower image part and an upper image part exist or not; and
adopting means for, when said overlap order information indicates existence of said upper image part and said lower image part and when said lower image part has a predetermined attribute, adopting the higher of densities of said upper image part and said lower image part for a color separation image, irrespective of an attribute allocated to said upper image part.

**17.** An apparatus in accordance with claim 16, wherein said memory comprises:
attribute information memory for storing a predetermined overlap attribute to said upper image part, said predetermined overlap attribute indicating to make a density of said upper age part preferential over a density of said lower image part for all of said plurality of color separation images.

**18.** An apparatus in accordance with claim 16, wherein said control means further comprises:
means for, when said overlap order information indicates existence of said upper image part, said lower image part and a third image part to be laid under said lower image part and when said lower image part has a predetermined attribute, adopting a density of said third image part, for the color separation image.

**19.** An apparatus in accordance with claim 16, wherein said plurality of color separation images are respectively expressed on Y, M, C, and K color plates.

**20.** An apparatus in accordance with claim 16, further comprising:
recording means for recording said color separation images onto a photosensitive film.

Fig. 1

Fig. 2

Fig.3

Fig.4

Fig. 5

Fig. 6

## Fig. 7

PREVIOUS STATE        OUTPUT STATE

'UNDERPRINT' ATTRIBUTE      'KNOCKOUT' ATTRIBUTE

## Fig. 8

PREVIOUS STATE        OUTPUT STATE

'UNDERPRINT' ATTRIBUTE      'KNOCKOUT' ATTRIBUTE

Fig. 9

<u>10</u> PROCESSING SYSTEM

RAM  18a  18  18b

| OBJECT INFORMATION | OVERLAP INFORMATION |

ROM  16

| 16a | CONTROL PROGRAMS |
| 16b | CONTROL DATA |

| PRIMARY AREA | FIRST AUXILIARY AREA | SECOND AUXILIARY AREA |

E0  E1  E2

14

CPU  INPUT I/F 24  DISPLAY CONTROLLER 28  RECORDER I/F 32

12  26  HALFTONE GENERATING CIRCUIT 34

20  30

22

Fig. 10

<u>18b</u>

P1 : L1 : A1

P2 : L2 : A2

- - - - - -

- - - - - -

Pm: Lm: Am

Fig. 20

OBJECT A

Y

YC | C

YM

M

OBJECT B          OBJECT C

Fig. 11

```
        ┌──────────────────────┐
        │   ROUTINE OF PAGE    │
        │  IMAGE PREPARATION   │
        └──────────────────────┘
                   │
                   ▼
        ┌──────────────────────┐  ─ S100
        │ ARRANGE A PLURALITY OF│
        │ OBJECTS IN PAGE IMAGE AND│
        │ ALLOCATE OVERLAP ORDERS AND│
        │ ATTRIBUTES TO OBJECTS │
        └──────────────────────┘
                   │
                   ▼
         ◇ COMPLETE ARRANGEMENT ◇  ─ S110
   NO      FOR ALL OBJECTS?
                  YES
                   │
                   ▼
        ┌──────────────────────┐  ─ S120
        │ OUTPUT OPERATION FOR EACH│
        │ COLOR PLATE          │
        └──────────────────────┘
                   │
                   ▼
        ┌──────────────────────┐  ─ S130
        │ TRANSMIT OUTPUT DATA │
        │ TO RECORDER          │
        └──────────────────────┘
                   │
                   ▼
              ┌────────┐
              │  END   │
              └────────┘
```

Fig. 12

Flowchart:

OUTPUT OPERATION

S200 — SORT OVERLAP INFORMATION BY OVERLAP ORDER DATA Lm

S210 — CLEAR PRIMARY AREA E0, 1ST AUXILIARY AREA E1, AND 2ND AUXILIARY AREA E2

S220 — n ← 1

(1)

S230 — OBJECT HAVING OVERLAP ORDER DATA Lm=n EXISTS? — NO → END

YES

S240 — ATTRIBUTE?

'KNOCKOUT'
S250 — EXPAND OBJECT IN PRIMARY AREA E0 ACCORDING TO METHOD 1

'OVERPRINT'
S260 — EXPAND OBJECT IN PRIMARY AREA E0 ACCORDING TO METHOD 2

'UNDERPRINT'
S270 — EXPAND OBJECT IN PRIMARY AREA E0 ACCORDING TO METHOD 3

'OVERPRINT + UNDERPRINT'
S280 — EXPAND OBJECT IN PRIMARY AREA E0 ACCORDING TO METHOD 4

(3)

S290 — n ← n + 1

(1)

(2)

Fig. 13

② S300

NO

**OBJECT HAVING OVERLAP ORDER DATA Lm=n+1 EXISTS?**

END

YES  S310 'UNDERPRINT' OR 'OVERPRINT+UNDERPRINT'

**ATTRIBUTE?**

③

'KNOCKOUT' OR 'OVERPRINT'

**CLEAR 1ST AUXILIARY AREA E1** — S320

**REVERSELY MASK 1ST AUXILIARY AREA E1 WITH OBJECT OF OVERLAP ORDER n** — S330

**COPY PRIMARY AREA E0 TO 2ND AUXILIARY AREA E2** — S340

**MASK 2ND AUXILIARY AREA E2 WITH OBJECT OF OVERLAP ORDER n** — S350

S360

**'KNOCKOUT' ATTRIBUTE?** NO

S370  YES  S380

**EXPAND OBJECT OF OVERLAP ORDER n+1 IN 1ST AND 2ND AUXILIARY AREAS E1 AND E2 ACCORDING TO METHOD 1**

**EXPAND OBJECT OF OVERLAP ORDER n+1 IN 1ST AND 2ND AUXILIARY AREAS E1 AND E2 ACCORDING TO METHOD 2**

$n \leftarrow n + 1$  S390

④

Fig. 14

④ ─── S400

OBJECT HAVING OVERLAP ORDER
DATA Lm=n+1 EXISTS? ──── NO ──── S470

COMBINE 1ST
AUXILIARY AREA
E1 WITH PRIMARY
AREA E0 ACCORDING
TO METHOD 2

YES

COMBINE 2ND
AUXILIARY AREA
E2 WITH PRIMARY
AREA E0 ACCORDING
TO METHOD 1 ──── S480

ATTRIBUTE? ──── S410

END

'UNDERPRINT'OR
'OVERPRINT+UNDERPRINT'

'KNOCKOUT'          'OVERPRINT'

S420                S430                S450

EXPAND OBJECT IN
1ST AND 2ND
AUXILIARY AREAS
E1 AND E2
ACCORDING TO
METHOD 1

EXPAND OBJECT IN
1ST AND 2ND
AUXILIARY AREAS
E1 AND E2
ACCORDING TO
METHOD 2

COMBINE 1ST
AUXILIARY AREA
E1 WITH PRIMARY
AREA E0 ACCORDING
TO METHOD 2

S460

COMBINE 2ND
AUXILIARY AREA
E2 WITH PRIMARY
AREA E0 ACCORDING
TO METHOD 1

n ← n + 1 ──── S440

④                ③

Fig. 15

PRE-PROCESS

| E0 | E1 | E2 |
|---|---|---|

S210

Fig. 17

KNOCKOUT PROCESS FOR OBJECT B

| E0 | E1 | E2 |
|---|---|---|

S370

Fig. 16

UNDERPRINT PROCESS FOR OBJECT A

Fig. 18

KNOCKOUT PROCESS FOR OBJECT C

E0

E1

E2

S430

Fig. 19

POST-PROCESS

(a) S470

COMBINE BY OVERPRINT

(b) S480

COMBINE BY KNOCKOUT